# DEMANDE DE BREVET EUROPEEN

(11) **EP 0 560 712 A1**
(43) Date de publication de la demande: **15.09.1993**
(21) Numéro de dépôt: 93810121.9
(22) Date de dépôt: 23.02.1993
(51) Int. Cl.: C12C 11/04, C12G 3/08

(54) **Procédé de fabrication d'une bière sans alcool ayant les propriétés organoleptiques d'une bière blonde de type lager**

(30) Priorité: 10.03.1992 CH 776/92
(71) Demandeur: BRASSERIE DU CARDINAL FRIBOURG S.A., CH-1700 Fribourg (CH)
(72) Inventeur: Caluwaerts, Henri Jean Julien, CH-1701 Fribourg (CH)
(74) Mandataire: Werner, Guy

(57) **Abrégé**

Procédé de fabrication d'une bière blonde sans alcool dont les propriétés organoleptiques sont celles d'une bière lager, comprenant la fabrication d'une bière alcoolisée blonde, de type lager, à partir de malts blonds contenant 20 à 30% de malts bruns, brassés de façon à obtenir un mout dont l'aténuation est de l'ordre de 50% et la désalcoolisation de la bière alcoolisée blonde par évaporation, sous vide poussé, d'au moins approximativement 50% du volume de cette bière.

Le concentrat obtenu par l'évaporation peut être redilué avec de l'eau, aromatisé et sucré jusqu'à une concentration de 4° Brix pour obtenir une bière sans alcool (BSA). Le concentrat peut être également soumis à une deuxième évaporation sous vide à une température inférieure à 60°C jusqu'à obtention d'un concentré titrant entre 45° et 65° Brix, stockable pendant plusieurs mois avant la redilution en BSA.

## Description

La présente invention concerne un procédé de fabrication d'une bière sans alcool, ayant les propriétés organoleptiques d'une bière blonde de type lager.

Il existe actuellement une demande croissante pour des bières pauvres en alcool ou sans alcool, parmi une population soucieuse de sa santé, de diététique ou de sécurité dans l'exercice d'une profession ou dans le cadre du trafic routier. Il existe également des pays où la consommation d'alcool est totalement prohibée par voie légale, mais où les consommateurs souhaitent disposer d'une boisson qui, quoique exempte d'alcool, ait néanmoins les propriétés organoleptiques les plus proches possibles d'un des types classiques de bière.

Les définitions légales d'une bière "pauvre en alcool" ou "sans alcool", ou au moins couramment admises, varient d'un pays à l'autre. On définit par exemple en Allemagne une bière pauvre en alcool comme une bière titrant 0,5-1,5% en poids d'éthanol, et une bière sans alcool comme une bière titrant moins de 0,5% d'éthanol. Les normes dans les pays arabes sont plus sévères : une bière est dite sans alcool lorsqu'elle titre moins de 0,1% en volume et de préférence moins de 0,05% en poids, c'est-à-dire en dessous de la limite de détection analytique usuelle.

Il existe des procédés variés pour aromatiser des solutions aqueuses, non alcooliques, pour leur donner des propriétés organoleptiques se raprochant plus ou moins de celles d'une bière. Ces procédés utilisent soit l'adjonction de substances aromatisantes (dont certaines sont disponibles dans le commerce), soit emploient des levures, dans des conditions où celles-ci ne sont pas physiologiquement susceptibles de produire une fermentation alcoolique, mais peuvent néanmoins excréter des métabolites contribuant à donner un goût de bière à la solution (voir p.e. CH-646 844). D'une manière générale ces procédés ne donnent pas entière satisfaction car les boissons ainsi obtenues se distinguent nettement sur le plan organoleptique d'une véritable bière et présentent souvent un goût "d'arôme artificiel" de bière.

Le brevet EP 245 845 décrit un procédé de fabrication d'une bière pauvre en alcool, ou éventuellement exempte d'alcool (<0,1% EtOH) à partir d'une bière ordinaire alcoolisée, dans lequel l'alcool est éliminé de la bière par entraînement gazeux à température ambiante, soit à l'aide d'air sec, soit à l'aide d'air saturé en vapeur d'eau. Le volume du liquide éliminé est compensé par de l'eau pure, éventuellement par un coupage avec une bière normale alcoolisée, les pertes d'arôme sont compensées comme ci-dessus (substances aromatisantes ou levures libérant des substances aromatisantes); le liquide est saturé à l'aide de C0₂ pour éliminer l'oxygène et le recarbonater. Ce procédé permet donc de fabriquer une bière légèrement alcoolisée (environ 1,4%), dans le cas du coupage avec une bière normale, ou une bière presque exempte d'alcool (--O,l %); mais un entraînement à l'air à température ambiante ne permet pas d'attein- dre une séparation H₂0/EtOH telle qu'elle satisfasse les normes les plus sévères en matière de bières sans alcool.

Plusieurs documents décrivent des procédés de désalcoolisation de bières ordinaires alcoolisées dans lesquels la séparation d'EtOH repose sur le principe de la distillation.

Le brevet CH-591 817 décrit un procédé de fabrication de bière pauvre en alcool (taux d'EtOH entre 0,2 et 1%) à partir d'une bière normalement alcoolisée dans lequel la séparation EtOH/H₂ O est effectuée en pulvérisant la bière, chauffée à 55°C, sous une pression de 2 kg/cm² dans une colonne de séparation.

Le document DE-PS 1 442 269 décrit un procédé de désalcoolisation par distillation sous vide, dans lequel une bière ordinaire, préalablement mise sous pression, est dégazée sous pression d'environ 1 bar (avec récupération de la mousse et des arômes) puis désalcoolisée à l'aide d'un évaporateur sous vide (0,05-0,12 bar), entre 30 et 50°C. La mousse et les arômes sont réinjectés après la désalcoolisation, puis la bière est recarbonatée à froid. De par les conditions opératoires, cette bière désalcoolisée contient nécessairement un taux d'EtOH résiduel décelable.

Le document DE-38 19 527 décrit un procédé similaire, dans lequel les arômes contenus dans la phase alcoolique sont extraits à l'aide de C0₂ sous pression et réinjectés à la bière sans alcool.

D'une manière générale, on reproche aux bières désalcoolisées par ces procédés d'avoir un goût plat et déséquilibré.

Enfin le brevet EP-235 626 décrit un procédé de désalcoolisation de bière blanche à levure, consistant à séparer d'abord la levure de la bière, à soumettre ensuite la bière à une distillation sous un vide de 0,06 à 0,1 bar, entre 38° et 48°, compenser la perte d'eau (environ 20-30%) due à la distillation, ajouter ensuite une levure de fermentation haute, laisser reposer le produit à basse température, séparer cette levure et enfin recarbonater le produit et ajouter une certaine quantité de levure typique de ce genre de bière. On peut obtenir par ce procédé des bières titrant moins de 0,5% en volume d'EtOH.

Ces procédés de fabrication de bières sans alcool, à partir de bières alcoolisées ordinaires (c'est-à-dire destinées ordinairement à la consommation) conduisent donc à des bières dites sans alcool, mais qui contiennent encore trop d'alcool pour satisfaire les normes légales les plus sévères, et/ou à des boissons dont les qualités organoleptiques sont inférieures à celles des bières ordinaires d'origine.

Le but de la présente invention est de permettre la fabrication d'une bière sans alcool correspondant aux normes les plus sévères, c'est-à-dire titrant moins de 0,05% EtOH et dont les qualités organoleptiques sont celles d'une bière normale.

Ce but est atteint grâce à un procédé présentant les caractéristiques de la partie caractérisante de la revendication 1.

Les caractéristiques des formes d'exécution préférées font l'objet des revendications dépendantes.

Il s'est avéré avantageux, selon l'invention, pour obtenir comme produit final une bière sans alcool ou BSA, dont les propriétés organoleptiques soient idéales, d'élaborerd'abord une bière alcoolisée particulière, tant par le choix des matières premières que par les caractéristiques de brassage, dite bière HM, avant de soumettre celle-ci à une désalcoolisation par distillation. Cette bière HM est une bière blonde de type lager.

On sélectionne de préférence des malts riches en matières azotées, pas trop désagrégés et de coloration plus élevée que la normale et on utilise de préférence des extraits de houblon sans tanin. L'étape de brassage emploie une technique "high-gravity" pour produire un moût riche en extrait non fermentescible mais facilement filtrable. Des ¡3-glucanases sont ajoutées en début de la maische et le houblonage est faible. Les sucres fermentescibles sont totalement éliminés en cours de fermentation et la maturation de la bière permet de développer des caractéristiques organoleptiques propres à la bière lager.

La distillation est précédée par une décarbonatation sous vide lors de laquelle les arômes les plus volatils sont entraînés et partiellement récupérés.

La distillation est effectuée sous vide poussé (pression de l'ordre de 60 à 100 millibars) et à température moyenne (50-65°C) de sorte que la fraction du liquide distillée est relativement importante, de l'ordre de 50% du volume initial, et que la concentration résiduelle d'éthanol dans la phase aqueuse désalcoolisée, ou concentrat de bière, est inférieure à 0,03% en volume. L'homme du métier comprendra aisément que la redilution de ce concentrat de bière par de l'eau de coupage conduit à une BSAdont le taux d'éthanol résiduel est inférieur à la limite analytiquement mesurable.

Le rapport de dilution, c'est-à-dire le Brix du produit fin de l'ordre de 4,0° est choisi de façon à obtenir un goût aussi proche que possible d'une bière alcoolisée lager.

Selon une variante préférée, les 4,0° Brix sont obtenus par le mélange de l'équivalent de 3° Brix en provenance du concentrat de bière obtenu par distillation de l'alcool, et de 1 ° Brix de sucre ou de sirops riches en oligo et polysaccharides.

Le produit ainsi dilué est aromatisé à l'aide des arômes récupérés lors des opérations de pré-évaporation et de décarbonatation, proportionnellement à la quantité de concentratde bière utilisé. Selon les goûts de la clientèle, l'aromatisation peut être renforcée par des extraits de plantes aromatiques amères et de dérivés de bière, qui sont disponbiles sur le marché (arômes Z). La note aromatique du houblon est donnée par ajout d'huiles essentielles de houblons fins. Cette note houblonnée est modulée selon les clientèles des pays de consommation de cette BSA. L'ajout d'extraits de houblon pré-isomérisés permet d'ajuster l'amertume désirée dans le produit fini.

Le mélange obtenu est carbonaté au CO₂, puis filtré, et la BSAainsi obtenue est prête à être soutirée en bouteilles ou en keg.

La stabilité colloïdale de la BSAainsi obtenue est particulièrement longue, supérieure à deux ans, même si la BSAest conservée à température ambiante. Dans ces mêmes conditions, la stabilité organoleptique de la BSA est également supérieure à deux ans.

Selon une variante particulièrement préférée de la présente invention, après la distillation, le concentrat, titrant environ 16° Brix est repris et subit une nouvelle concentration dans un deuxième évaporateur sous vide à double effet, de façon à produire un concentré titrant de 45° à 60° Brix. Ce concentré, soutiré aseptiquement, peut être conservé plus de quatre mois, éventuellement plus de six mois à basse température. Cette forme d'exécution de la présente invention permet de produire un produit intermédiaire, le concentré de BSA, qui peut être avantageusement vendu tel quel : ceci permet en effet un gain appréciable de frais de transport ainsi que la production de BSA chez la clientèle même en l'absence d'installations de brassage et de maturation à l'aide d'une opération de dilution en deux étapes relativement simples, ne nécessitant qu'une installation technique minimale.

La redilution du concentré comprend d'abord une étape de prédilution (avec de l'eau très pure) jusqu'à l'obtention d'un sirop à 20° Brix. Ce sirop est soumis à une digestion enzymatique, pendant 18 à 48 heures à l'aide d'un mélange d'enzymes comprenant des enzymes protéolytiques et des glucanases. Le but de cette réaction enzymatique est de faciliter la filtration de la solution finale. Les opérations ultérieures de préparation de la BSAà partir de ce sirop, c'est-à-dire la dilution, l'aromatisation, la carbonatation et la filtration sont similaires aux opérations correspondantes effectuées sur le concentrat de BSA et déjà décrites ci-dessus.

Les caractéristiques et les avantages de la présente invention seront mieux comprises par l'homme du métier grâce à la description détaillée ci-dessous de deux formes d'exécution préférées de la présente invention, ainsi que du diagramme de procédé et de la description du schéma de l'installation utilisant ces procédés.

Brève description des figures.

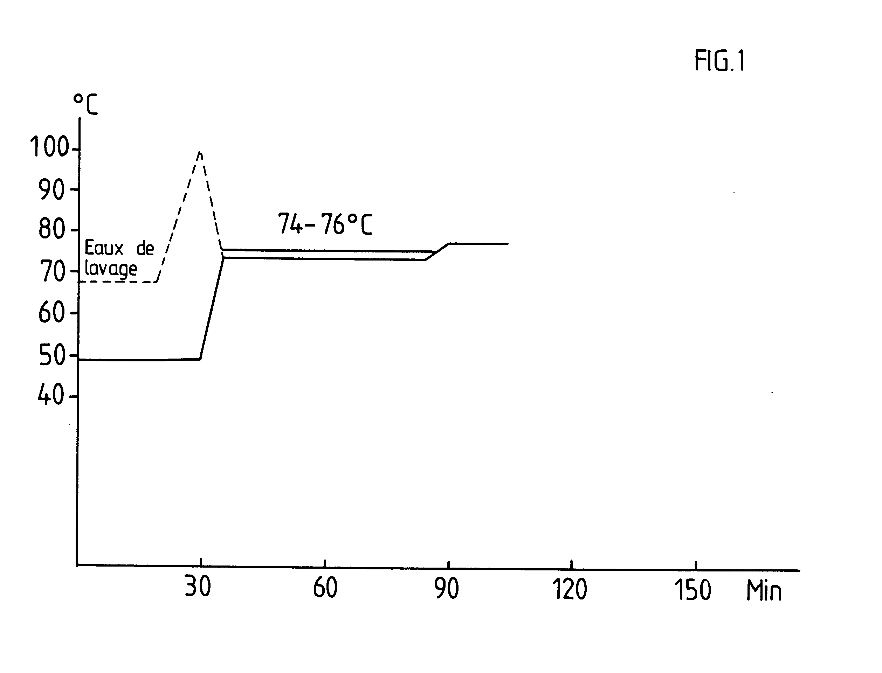

La figure 1 montre le diagramme de maische utilisé lors du brassage de la bière HM.

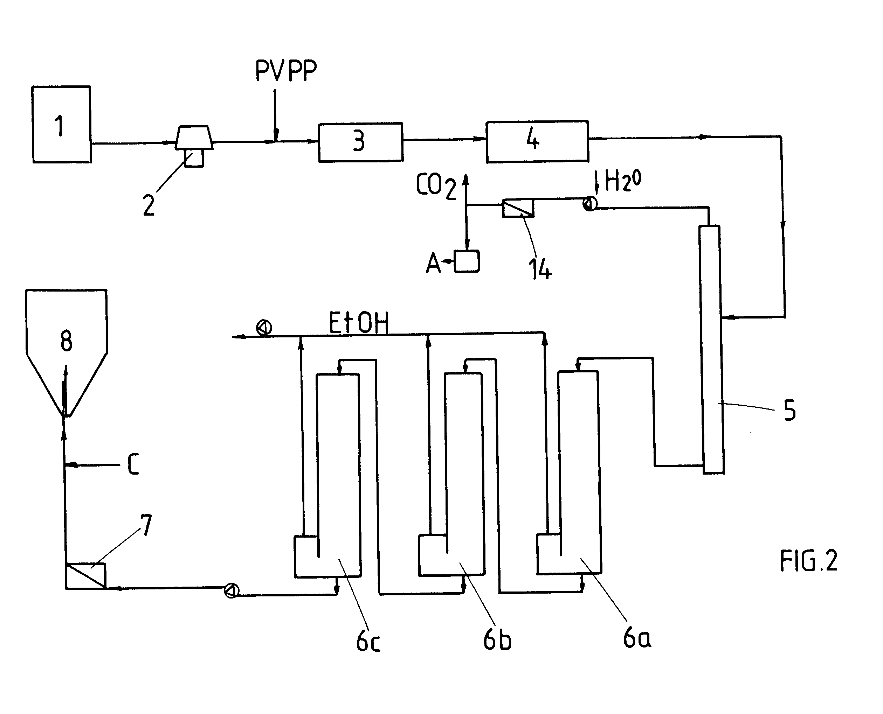

La figure 2 est un diagramme montrant la désalcoolisation de la bière HM dans lequel 1 désigne un tank de garde de la bière alcoolisée en fin de maturation, 2 désigne une centrifugeuse, PVPP symbolise l'injection de polyvinylpolypyrolidone, PVPP désigne un filtre, 4 désigne un tank tampon, 5 désigne la colonne de préchauffage et de dégazage sous pré-vide, 14 désigne un dispositif refroidisseur-condenseur des arômes A, connu en soi, 6a, 6b, 6c désignent les trois étages de l'évaporateur, EtOH symbolise la sortie d'alcool, 7 désigne un refroidisseur, C symbolise l'injection de charbon et 8 désigne le tank tampon où est stocké le concentrat à 17° Brix.

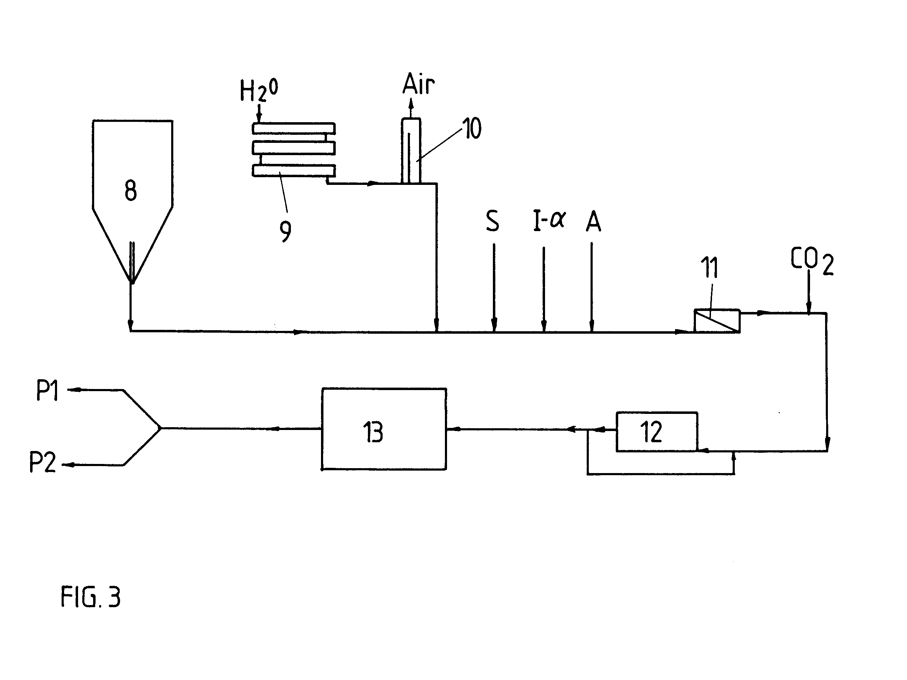

La figure 3 est un diagramme montrant la dilution du concentrat et la fabrication de la BSA, dans lequel 8 désigne le même tank tampon, H₂ O symbolise l'entrée d'eau brute, 9 désigne un dispositif de purification par osmose inverse et 10 un dispositif d'élimination de l'air dissout dans cette eau, tous deux connus en soi, S, I-a et A symbolisent respectivement l'adjonction de sucre, d'arôme de houblon pré-isomérisé et d'arômes récupérés dans l'étape précédente, 11 désigne un refroidisseur et C0₂ symbolise le regaza- ge, 12 désigne un filtre à kieselguhr, 13 désigne un tank de stockage de la BSA à 4°Brix, sous pression, et P1 et P2 symbolisent les sorties vers deux unités de packaging, bouteillerie et soutirage en fût respectivement, connus en soi.

La bière HM est produite dans une unité de brasserie de type connu, qu'il est inutile de décrire ici.

Le procédé de fabrication des bières blondes de type lager est également connu dans son ensemble des hommes du métier et ne sera donc décrit et illustré par le diagramme de la figure 1 que dans la mesure nécessaire pourfaire ressortir les spécificités de la bière spéciale HM destinée à la distillation sous vide.

Les malts utilisés sont des malts blonds, peu désagrégés, et relativement riches en matière azotée solubles et totales (12,8 à 13%). Le mélange de malts comprend entre 20 et 30% de malt brun. La coloration est comprise entre 24 et 35 EBC.

La salade est fabriquée par un empâtage épais, 2,3-2,8 hl et de préférence 2,3 à 2,5 hl, pour 100 kg de malt. En début de maische, on corrige le pH de façon à obtenir une valeur de 5,4-5,6 et on ajoute une (3-glucanase (360-550 g/t de salade). La température d'empâtage est de 50°C, et la durée d'empâtage est réduite par rapport aux durées habituellement utilisées, de préférence à moins de 40 mn.

Le brassage est effectué par infusion. La montée en température jusqu'au palier de saccharification doit être rapide, au moins 3°C/mn. Selon le diagramme de la figure 1. La température de saccharification, 74°C, est, atteinte en 5 mn. La pause de saccharification, à 74-76°C, est de 35 à 50 mn. Ensuite la montée à 78°C et la filtration sont aussi rapides que possible (la filtration ne doit pas dépasser 200 mn.). L'ébullition dure de 60 à 80 mn, et le pH en fin d'ébullition est compris entre 4,95 et 5,15. La coloration en fin d'ébullition est de 20-25 EBC.

Le moût obtenu présente une atténuation limite réelle de 48-53% et de densité primitive 15,8-16,8° Plato. Le houblonage est faible.

Avec ce schéma de brassage, la teneur en sucres fermentescibles est inférieure à celles habituellement obtenues dans les moûts et représente, de préférence, au maximum 50% de l'extrait total.

En cours de fermentation, il y a élimination complète des sucres fermentescibles. La maturation est effectuée de façon à développer les caractéristiques organoleptiques propres à une bière lager. En fin de garde, la bière est filtrée et stabilisée au PVPP (polyvinylpolypyrolidone).

Le procédé de désalcoolisation de la bière HM et la fabrication de BSA vont maintenant être décrits dans les exemples ci-dessous en se référant aux figures 2 et 3.

### Exemple 1 :

La bière HM, centrifugée et stabilisée, destinée à être désalcoolisée est pompée dans un tank tampon d'alimentation. Un préchauffage sous vide permet la décarbonatation. La bière est aspirée sous vide (pression de 60-100 milibars) dans la colonne de préchauffage (50-55°C). Ce préchauffage sous pré-vide libère le C0₂ de la bière et en même temps une partie de l'éthanol distille, entraînant une fraction des arômes. Les vapeurs alcooliques aromatiques sont condensées et récupérées au niveau de la pompe à vide. Une part importante de ce mélange alcool-arômes se condense dans l'eau de l'anneau liquide de la pompe à vide (sperrwasser). Cette eau, traitée par un système de circulation, est enrichie 280 x en arômes. Le trop plein de cette solution d'arômes est recueillie, stockée, et sera incorporée à la BSA lors de la phase finale de son élaboration, comme il sera décrit ci-dessous. La mousse qui se forme pendant le dégazage de la bière, se condense dans la colonne, dont la hauteur est calculée à cette fin.

On remarquera que cette décarbonatation constitue une première phase d'évaporation, de concentration et de désalcoolisation.

A la sortie de la colonne de préchauffage, la bière dégazée est évaporée en continu, c'est-à-dire distillée, par passage dans un évaporateur à flot tombant, à trois étages. Les températures doivent être comprises entre 50 et 65° pour des vides de 60 à 100 milibars.

L'utilisation d'un évaporateur à flot tombant à 3 étages travaillant sous vide, garantit une brève durée de séjour de la bière dans l'évaporateur. Les températures du produit sont suffisamment faibles pour exclure une caramélisation et ne pas influencer les caractéristiques organoleptiques du produit. Le concentrat désalcoolisé sortant de l'évaporateur a une concentration en matière sèche de 14 à 18%. La concentration en éthanol du concentrat désalcoolisé, est inférieur à 0,04% en poids, car la distillation étagée, sous vide, garantit un effet de séparation et de désalcoolisation maximale. Le taux d'évaporation est de l'ordre de 50%. Les échanges de calories lors des différentes phases de la distillation sont multipliées au maximum, afin d'éviter de brusques sauts de température et d'économiser le plus efficacement possible les calories. Les vapeurs alcooliques subissent dans une colonne supplémentaire annexe une rectification qui ne fait pas partie de la présente invention.

Ala sortie de l'évaporateur, on ajoute, in-line, 140 à 200 gr. de charbon actif par hl de concentrat. Le concentrat est recueilli et stocké dans des cuves cy- lindro-coniques à 5°C durant 18 heures. Ces tanks sont munis d'un système de crépine retenant le charbon lors du soutirage du liquide.

Le rapport de dilution du concentrat avec de l'eau de coupage a été fixé à la suite de tests organoleptiques de telle sorte que le produit fini titre 4,0° Brix. L'eau de coupage doit être particulièrement pure et pauvre en nitrate, et en outre contenir moins de 0,1 mg/I de O₂. La dilution est effectuée avec de l'eau ayant subi une déminéralisation par osmose inverse de façon à titrer moins de 1,8° dH en dureté totale et à contenir moins de 7 mg/I de CL⁻, 10 mg/I NO₃⁻. Le concentrat est dilué à 3° Brix (ce qui correspond à la densité apparente d'une bière lager) et on ajoute proportionnellement l'équivalent d'un degré Brix à l'aide d'une solution de saccharose, sous forme de sucre de canne extrêmement bien raffiné.

Proportionnellement à la quantité de concentrat de bière utilisé, on réajoute à cette dilution les arômes récupérés lors des opérations de pré-évaporation (arômes du "sperrwasser"). L'amertume du produit est ajustée par ajout d'extrait de houblon pré-isomérisé et aromatisé (4-10 mg/I). On peut également renforcer l'arôme de bière, selon les désirs de la clientèle, par ajout d'arômes naturels de bière se trouvant sur le marché.

La solution aromatisée ainsi obtenue est carbonatée à 5-5,5 gr/I de C0₂ avant la filtration. La bière désalcoolisée et recarbonatée subit enfin une filtration sur filtre à kieselguhr de façon à ce que son trouble soit inférieur à 0,25 EBC (formazine). La bière sans alcool, ainsi terminée, est prête à être soutirée en bouteille ou en keg.

### Exemple 2 :

Production de concentré de BSA stockable Après la désalcoolisation par distillation décrite dans l'exemple 1, le concentrat obtenu subit une deuxième évaporation sous vide, par passage dans un évaporateur à film tombant, à double effet, de façon à obtenir un concentré titrant entre 45° et 65° Brix. La température d'évaporation est maintenue en-dessous de 60°C, afin de conserver les qualités organoleptiques de la bière. A la sortie de l'évaporateur, le concentré est aromatisé à l'aide des arômes de bière récupérés lors de l'étape de désalcoolisation (v. ex. 1). On peut également à ce stade ajouter de l'arôme naturel de houblon, si l'on désire accentuer le caractère "Pilz" de la BSA finale. En production continue, ces opérations d'aromatisation sont effectuées in-li- ne, par injection proportionnelle, à l'aide de pompes doseuses.

Le concentré aromatisé est ensuite pasteurisé flash, puis soutiré aseptiquement et conservé dans des poches aseptiques et anaérobiques en plastique, de type bag-in-box, de 220 kg. Ainsi conditionné, le concentré stocké à 10°C a une durée de vie de plus de 6 mois et peut être vendu tel quel à une clientèle qui procédera elle-même à la redilution et à la finition de la BSA.

### Exemple 3 :

Production de BSA à partir du concentré 45°-60° Brix.

La production de BSA à partir du concentré comporte une première étape de prédilution et de pré- traitement enzymatique : le concentré est dilué avec de l'eau osmosée, de dureté totale inférieure à 1,8° dH contenant moins de 7 mg/I CL⁻, moins de 10 mg/I NO₃⁻ et moins de 0,2 mg/I O2, pour obtenir un sirop titrant 20° Brix. La dilution est effectuée à une température de 18°C, ± 2°C, dans un tank stérile, muni d'un agitateur lent, sous une atmosphère de C0₂ à 0,1 bar.

Durant cette prédilution, on injecte, in-line, un mélange d'enzymes composées de :
- enzymes protéolytiques (600-1200 NF/kg de C45)
- β-glucanase fongique (400-700 u/kg de C45)
- xylanase fongique (350-600 uCMC/kg de C45) La solution enrichie en enzyme est mise à incuber pendant 18 à 24 heures, à 18° ± 2°C, sous agitation constante.

En fin d'incubation, avant les opérations de dilution finale, on ajoute une solution de saccharose en quantité suffisante pour correspondre à l'équivalent de 1° Brix dans le volume final de BSA.

Le sirop, après le traitement enzymatique et l'adjonction de saccharose, est dilué avec de l'eau osmosée désaérée (v. ci-dessus), de façon à obtenir une solution titrant 4,0 ± 0,2° Brix. En cours de l'opération de dilution, on injecte, en quantités proportionnelles, à l'aide de pompes doseuses, une solution d'alginate de propylèneglycol (E 405) à raison de 3-6 gr/hl de BSA finale; on injecte également une solution d'extrait de houblon aromatique pré-isomérisé à raison de 10-20 IBU. (Quantité variable en fonction des goûts de la clientèle). On peut également, selon la demande de la clientèle compléter l'aromatisation par un suplé- ment d'arôme de bière se trouvant sur le marché (dosage : 1,5-8 ml/hl).

La bière ainsi obtenue doit titrer moins de 0,005% vol. d'alcool.

La bière est stabilisée par ajout d'acide ascorbique (1-2 g/hl).

La BSA est ensuite refroidie à +2_{°}C et saturée en C0₂ (5,0-5,5 g/I). La BSA est enfin filtrée sur un filtre à kieselguhr de façon à ce que son trouble soit inférieur à 0,5 EBC (formazyne). La BSA, ainsi terminée, est prête à être soutirée et mise en bouteille ou en fût.

En conclusion, on remarquera que la BSA peut être obtenue à partir de la bière HM désalcoolisée aussi bien par redilution directe du concentrat titrant environ 16° Brix qu'à partir du concentré titrant de 45 à 60° Brix, produit intermédiaire stockable.

La BSA obtenue par l'une ou l'autre de ces formes d'exécution de la présente invention se distingue des autres BSA de l'art antérieur par :
a. sa stabilité coloïdale particulièrement longue qui lui confère une brillance élevée (trouble EBC formazyne inférieure à 1,0 EBC) après 24 mois de conservation à température ambiante (environ 20°C). Dans certains échantillons de BSA selon l'invention, on a mesuré un trouble de seulement 1,7 EBC après 54 mois de stockage à 20°C. b. Sa stabilité organoleptique élevée : en dégustation triangulaire, la différence est non significative entre des BSA fraîches et âgées de plus de 24 mois, réalisées selon la présente invention.

Sur le plan commercial, la durée de vie du produit fini peut être estimé à plus de trois ans.

## Revendications

1. Procédé de fabrication d'une bière blonde sans alcool dont les propriétés organoleptiques sont celles d'une bière lager, comprenant
- la fabrication d'une bière alcoolisée blonde, de type lager, à partir de malts blonds contenant au moins 12% de matières azotées et de 20 à 30% de malts bruns, brassés de façon à obtenir un mout dont l'até- nuation est de l'ordre de 50% et la densité primitive de l'ordre de 16%
- la désalcoolisation de ladite bière alcoolisée blonde par évaporation, sous vide poussé, d'au moins approximativement 50% du volume de cette bière.

2. Procédé selon la revendication 1, caractérisé par le fait que l'on emploie 2,3 à 2,5 m³ d'eau pour l'empâtage d'une tonne de malt et qu'on ajoute 360 à 550 gr de (3-glucanase par tonne de malt empâté.

3. Procédé selon la revendication 1 ou 2, caractérisé par le fait que le brassage est effectué par infusion, que la durée d'empâtage est réduite à moins de 40 mn et que la montée à la température de saccharification est effectuée à une vitesse d'au moins 3°C/mn, de façon à ce que les sucres fermentescibles représentent au maximum 50% de I'extraittotaI.

4. Procédé selon la revendication 3, caractérisé en ce que les sucres fermentescibles sont complètement éliminés en cours de fermentation et qu'en fin de garde, la bière est filtrée et stabilisée par adjonction de polyvinylpolypyrolidone.

5. Procédé selon l'une quelconque des revendications 1 à 4, caractérisé en ce que ladite évaporation est effectuée en continu et comprend
- une étape de décarbonatation sous une pression de 0,06-0,1 bar, au cours de laquelle une partie de l'éthanol et des arômes sont entraînés par le C0₂ et partiellement condensés.
- une étape de distillation sous pression de 0,06-0,1 bar à une température comprise entre 50° et 65°C, les arômes condensés avec la phase éthanolique étant partiellement extraits et récupérés.

6. Procédé selon la revendication 5, caractérisé en ce que le concentrat obtenu par ladite évaporation est dilué avec de l'eau déminéralisée et désoxygénée, jusqu'à une concentration de 3° Brix et que la solution diluée obtenue est additionnée d'une quantité de saccharose équivalente à 1° Brix.

7. Procédé selon la revendication 6, caractérisé en ce que, entre la distillation et la dilution, ledit concentrat est additionné de 140 à 200 gr. de charbon actif par hectolitre dudit concentrat, puis stocké pendant environ 18 heures à 5°C, et que ledit concentrat est séparé dudit charbon actif avant ladite dilution.

8. Procédé selon l'une des revendications 6 ou 7, caractérisé en ce que ladite solution diluée est aromatisée à l'aide d'arômes choisis parmi les arômes condensés et récupérés pendant l'évaporation, des huiles essentielles de houblon fins, des extraits de houblon préisomérisés et des arômes naturels de bière.

9. Procédé selon la revendication 5, caractérisé en ce que ledit concentrat, obtenu par ladite évaporation, est soumis à une deuxième évaporation sous vide à une température inférieure à 60°C jusqu'à obtenir un concentré titrant entre 45° et 65° Brix.

10. Procédé selon la revendication 9, caractérisé en ce que ledit concentré est pasteurisé et soutiré aseptiquement dans des récipients étanches, aseptiques et anaérobiques.

11. Procédé selon l'une des revendications 9 ou 10, caractérisé en ce que ledit concentré est prédilué avec de l'eau déminéralisée et désoxygénée, jusqu'à obtention d'un sirop, de concentration de l'ordre de 20° Brix et que ledit sirop subit un traitement par enzymes, à environ 18°C, pendant une durée de 18 à 24 heures.

12. Procédé selon la revendication 11, caractérisé en ce que lesdits enzymes sont choisis parmi les enzymes protéolytiques, les ¡3-glucanases fongiques et les xylanases fongiques.

13. Procédé selon la revendication 12, caractérisé en ce que ledit sirop est additionné de saccharose et dilué avec de l'eau déminéralisée et désoxygénée de façon à obtenir une solution rediluée titrant environ 4° Brix, la quantité de saccharose présente dans ladite solution rediluée représentant l'équivalent de 1° Brix, et titrant moins de 0,005% en volume d'alcool.

14. Procédé selon la revendication 13, caractérisé en ce que ladite solution rediluée est additionnée d'alginate de propylène glycol et aromatisée à l'aide d'arômes choisis parmi les arômes condensés et récupérés pendant l'évaporation, des huiles essentielles de houblons fins, des extraits de houblon pré-isomérisés et des arômes naturels de bière.

15. Procédé selon la revendication 14, caractérisé en ce que, après l'aromatisation, ladite solution rediluée est refroidie à environ +2_{°}C, saturée au C0₂ et filtrée sur un filtre à kieselguhr.
